# EUROPÄISCHE PATENTSCHRIFT

(11) **EP 0 581 288 B1**
(45) Veröffentlichungstag und Bekanntmachung des Hinweises auf die Patenterteilung: **02.10.1996**
(21) Anmeldenummer: 93112180.0
(22) Anmeldetag: 29.07.1993
(51) Int. Cl.: B60R 22/46

(54) **Gurtstraffer bei Sicherheitsgurtanordnungen in Kraftfahrzeugen**
Tensioner for seat-belt systems in motor vehicles
Tendeur pour systèmes de ceintures de sécurité dans des véhicules automobiles

(30) Priorität: 30.07.1992 DE 4225218
(43) Veröffentlichungstag der Anmeldung: 02.02.1994
(73) Patentinhaber: TAKATA (EUROPE) VEHICLE SAFETY TECHNOLOGY GmbH, D-89081 Ulm (DE)
(72) Erfinder: Mitzkus, Jürgen, D-73557 Mutlangen (DE); Kopetzky, Robert, D-73557 Mutlangen (DE)
(74) Vertreter: Finsterwald, Manfred, Dipl.-Ing., Dipl.-Wirtsch.-Ing.

(56) Entgegenhaltungen:
- DE-A- 2 505 626

## Beschreibung

Die Erfindung betrifft einen Gurtstraffer bei Sicherheitsgurtanordnungen in Kraftfahrzeugen nach dem Oberbegriff des Anspruchs 1 bzw. des Anspruchs 9.

Da die Rückzugskraft eines mit einer Rückzugsfeder ausgestatteten Gurtaufrollmechanismus aus Komfortgründen sehr gering ist und im allgemeinen nur zwischen 2 und 22 N beträgt, liegen von dem Insassen eines Fahrzeuges angelegte Sicherheitsgurte im allgemeinen nur relativ lose an dessen Körper an. Trägt der Insasse zudem noch eine voluminösere Kleidung, beispielsweise einen dicken Mantel, ist nicht mehr gewährleistet, daß der Sicherheitsgurt bei einem Unfall ausreichend straff am Körper des Benutzers anliegt. Aus diesem Grunde besteht ein Bedürfnis, den Gurt beim Auftreten eines Unfalles schlagartig so zu straffen, daß der Insasse sicher und ohne großes Spiel vom Gurtsystem festgehalten wird.

Daher sind Gurtstrafferanordnungen erforderlich, die den Gurt mit einer hohen Kraft über einen hinreichende Weg straffen. Sie sollen gleichzeitig jedoch kompakt und preiswert sowie nach einer unfall-bedingten Straffung lösbar sein, so daß der Gurt nach einem kleineren Unfall beispielsweise für die Fahrt des Wagens zu einer Werkstatt noch angelegt werden kann.

Es ist schon bekannt (DE-42 21 398 A1), das am Chassis befestigte Gurtschloß bei einem Unfall durch eine Straffervorrichtung schlagartig um ein gewisses Stück in Richtung des Fahrzeugchassis zu bewegen, um so die für ein enges Anliegen des Sicherheitsgurtes am Körper des Insassen erforderliche Gurtverkürzung herbeizuführen. Weiter sind bereits Gurtstraffer bekannt, die üblicherweise pyrotechnische Treibladungen verwenden, um die Gurtrolle zur Straffung des Gurtes zu drehen. Die bekannten Straffer haben jedoch insbesondere den Nachteil, entweder nur über einen kurzen Weg zu straffen (EP-0 059 643 B1, US-A-24 77 907) oder sie sind nicht ausreichend kompakt (DE 35 31 856 A1).

Die den Oberbegriff der unabhängigen Ansprüche 1 und 9 bildende DE 25 05 626 A1 beschreibt eine Sicherheitseinrichtung für Fahrzeuge, insbesondere Kraftfahrzeuge, mit einem einem Fahrzeugsitz zugeordneten Sicherheitsgurt und einer den Gurt selbsttätig aufwickelnden Aufwickelvorrichtung sowie mit einer den Sicherheitsgurt bei einem Fahrzeugunfall straff am Körper des Fahrzeuginsassen zur Anlage bringenden Gurtspannvorrichtung, die durch ein mit der Aufwickelvorrichtung verbundenes, von einer durch ein Auslöseglied betätigbaren Gastreibladung in Drehung versetzbares Antriebselement gebildet ist, wobei ein drehkolbenartig ausgebildetes Antriebselement vorgesehen ist, das ein in einem Gehäuse unter Bildung eines ringförmigen, durch einen radialen Anschlag geteilten Arbeitsraums umlaufendes Umlaufteil aufweist, welches mit der Aufwickelvorrichtung kuppelbar ist und an dem ein von der Gastreibladung beaufschlagbarer Flügelkolben gehalten ist, der das Umlaufteil in Umfangsrichtung antreibt.

Aus der US 4,838,148 ist eine Antriebsvorrichtung bekannt, die Fluiddruck und -strömung in mechanische Bewegung und Kraft umwandelt, mit einem Gehäuse, das einen Innenhohlraum mit im allgemeinen parallelen oberen und unteren Wänden definiert, einem flexiblen und im allgemeinen nicht dehnbaren Riemen, der zumindest teilweise innerhalb des Hohlraums angebracht ist, wobei ein Teil des Riemens innerhalb des Hohlraums eine offene Schlaufe schafft, der Riemen innerhalb des Hohlraums bewegbar ist, um die Fläche der offenen Schlaufe zu variieren, und so positioniert ist, daß die Oberseite und die Unterseite des die Schlaufe bildenden Riementeils eng zu den oberen und unteren Wänden des Hohlraums benachbart sind, einer Abdichtung, die das offene Ende der offenen Schlaufe verschließt, wobei die Abdichtung abdichtend mit voneinander beabstandeten Teilen der inneren Oberfläche der Schlaufe benachbart zu den gegenüberliegenden Enden der offenen Schlaufe in Eingriff steht, und Mitteln, die bewirken, daß der Fluiddruck innerhalb der offenen Schlaufe größer ist als der Fluiddruck innerhalb des Hohlraumes, jedoch außerhalb der offenen Schlaufe, so daß der Druckunterschied bewirkt, daß der Gürtel sich bewegt, um die von der Abdichtung und der Schlaufe umschlossene Fläche zu vergrößern, wobei die Bewegung des Riemens so ausgebildet ist, daß ein mechanischer Ausgang der Antriebsvorrichtung geschaffen wird.

Aus der DE 41 11 117 C1 ist ein riemengetriebener Drehantrieb mit einem ringförmig geschlossenen Riemen bekannt, der in einem druckmitteldichten Gehäuse unter Bildung von bewegbaren Druckkammern über rollenförmige Körper geführt ist, wobei mindestens einer der rollenförmigen Körper mit einer aus dem Gehäuse nach außen geführten drehbaren Welle verbunden ist und die bewegbaren Druckkammern mit Druckmittel beaufschlagbar sind. Bei diesem bekannten Drehantrieb ist der geschlossene Riemen unter Bildung von zwei gegeneinander druckmitteldichten Druckkammern durch ein statisches, in Richtung einer der rollenförmigen Körper wirkendes Preßglied auf einen Teil seiner Länge aufeinanderpreßbar, und das Preßglied steht mit einer von außen stellbaren Stelleinrichtung zur Nachstellung der Anpreßkraft in Wirkverbindung.

Die US 5,050,814 beschreibt ein Sicherheitsgurtaufwickelmittel mit einer Straffereinrichtung, die einen Antrieb umfaßt, der im Fall eines Unfalls aktiviert wird, wobei der Antrieb von einer Gurtwickelspule des Gurtaufwickelmittels beabstandet und im Fall der Betätigung des Antriebs über ein Kupplungsmittel damit verbindbar ist, welches ein erstes Kupplungsbauteil umfaßt, das auf einer angetriebenen Scheibe angebracht und so ausgebildet ist, daß es im Fall einer Drehung der Scheibe mit einem zweiten Kupplungsbauteil in Eingriff gelangt, das mit der Gurtwickelspule verbunden ist. Bei dieser bekannten Anordnung ist die angetriebene Scheibe als Trägheitsscheibe ausgelegt, die über den Antrieb drehbar ist, und der Antrieb umfaßt eine gasdruckbetriebene Zylinder/Kolben-Einheit, wobei der Kolben mit der Trägheitsscheibe über eine Kolbenstange verbunden ist.

In einer Ausführungsform dieser bekannten Vorrichtung ist die Zylinder/Kolben-Einheit mit der Trägheitsscheibe über ein Seil verbunden, das vor der Betätigung des Antriebs über einen Teil des Umfangs der Trägheitsscheibe aufgewickelt ist und durch Betätigung der Zylinder/Kolben-Einheit die Trägheitsscheibe in Drehung versetzt.

Die vorliegende Erfindung zielt darauf ab, einen Gurtaufrollmechanismus bei Sicherheitsgurtanordnungen dazu zu verwenden, bei gefährlichen und unfallbedingten Beschleunigungen am Fahrzeug den Gurt um das erforderliche Stück zu straffen, bevor der Insasse sich durch die Unfallbeschleunigungen zu bewegen beginnt. Das wesentliche Problem besteht hierbei darin, daß beim plötzlichen Druckaufbau der Antrieb des Gurtaufrollmechanismus bei kompaktem Aufbau der Strafferanordnung im allgemeinen nur eine Umdrehung ausführen kann, was in vielen Fällen für eine genügende Straffung des Sicherheitsgurtes nicht ausreichend ist. Die Erfindung will hier Abhilfe schaffen. Weiter soll die Rückzugsfederungsanordnung nach einer unfallbedingten Auslösung des Straffers noch verwendbar sein. Schließlich soll der Gurtstraffer kompakt ausgebildet sein.

Diese Aufgabe wird erfindungsgemäß durch die Merkmale im kennzeichnenden Teils des Anspruchs 1 bzw. des Anspruchs 9 gelöst.

Der Erfindungsgedanke ist also darin zu sehen, daß die Nabe um einen Winkel gedreht wird, der vom Verhältnis des Innenwanddurchmessers zum Nabendurchmesser bestimmt ist, und zwar so, daß der Gurt um eine Strecke gestrafft wird, die länger als das Produkt aus dem Durchmesser der Gurtrolle und dem Durchlaufwinkel (in Radians, rad) ist.

Eine vorteilhafte Ausführung der Erfindung sieht vor, daß der von dem Druckraum abgewandte Teil des Laufraumes an oder nahe seinem Ende mit einer Entlüftung versehen ist. Hierdurch kann die vor dem kräfteübertragenden Dichtmittel vorhandene Luft bei dessen Umlauf um die Nabe entweichen, so daß im Raum vor dem kräfteübertragenden Dichtmittel kein übermäßiger Druckaufbau stattfindet, und somit eine höhere Zugkraft und eine größere Laufstrecke erreicht bzw. ein kleinerer Treibsatz benützt werden kann.

Während es grundsätzlich möglich ist, das kräfteübertragende Dichtmittel dauernd in Eingriff mit der Nabe zu halten, wodurch allerdings die normale Gurtstrafferfunktion beeinträchtigt wird, ist es bevorzugt, wenn das kräfteübertragende Dichtmittel zunächst außer Eingriff mit der Innenwand und/oder der Nabe, vorzugsweise der Nabe, bzw. diese mit dem Gurtaufrollmechanismus ist und erst bei Auslösung der Druckquelle ein Eingriff des kräfteübertragenden Dichtmittel mit der der Innenwand und/oder der Nabe bzw. der Nabe mit dem Gurtaufrollmechanismus entsteht, und zwar bevor der Druckaufbau im Laufraum vor dem kräfteübertragenden Dichtmittel so groß ist, daß das kräfteübertragende Dichtmittel auf seiner Bahn um die Achse der Nabe bewegt wird.

Um eine besonders kompakte und einfache Ausführung der vorliegenden Erfindung zu erreichen, kann es vorteilhaft sein, die Nabe und die Gurtrolle koaxial anzuordnen.

Zu einer Vereinfachung der erfindungsgemäßen Vorrichtung kann die Nabe und evtl. auch das kräfteübertragende Mittel drehbar, aber unverschiebar in einem am Chassis befestigten Gehäuse angebracht werden.

Eine weitere vorteilhafte Ausbildung der Erfindung sieht vor, die teilkreisförmige Innenwand sowie vorzugweise auch das kräfteübertragende Dichtmittel und gegenbenenfalls weitere Teile des Straffers, wie z.B. zusätzliche Dichtmittel so auf einem Schieber anzuordnen, daß der Eingriff zwischen dem kräfteübertragendem Dichtmittel und der Innenwand oder der Nabe bzw. der Nabe und dem Gurtaufrollmechanismus erst dann hergestellt wird, wenn eine unfallbedingte Beschleunigung vorliegt und dadurch die Druckquelle ausgelöst wird.

Dieser Schieber kann gemäß einer erfindungsgemäßen Ausbildung durch ein Ventil-Verschiebe-Glied in seine Arbeitsposition bewegt werden.

Bei einer praktischen Ausführung der Erfindung wird ein Planetengetriebe verwendet, indem das kräfteübertragende Dichtmittel als Planetenrad, die Innenwand als Innenzahnkranz und die Nabe als Sonnerad ausgebildet ist, wobei die Übersetzungseigenschaften eines Planetengetriebes dazu ausgenutzt werden, aus einem etwas weniger als 360° betragenden Umlauf des Planetenzahnrades einen winkelmäßig wesentlich größeren Umlauf des Sonnenrades herbeizuführen. Beträgt der Umlauf des Planetenrades beispielsweise 310°, was unter Berücksichtigung der erforderlichen Druckabdichtung am Ende des Planetenrad-Laufraumes möglich ist, so läßt sich bei geeigneter Durchmesserwahl von Sonnenrad und Planetenrad ein Drehwinkel des Sonnenrades von 650° erreichen. Während der absolute Umlaufweg des Mittelpunktes des Planetenzahnrades z.B. 10 cm beträgt, kann eine Straffung des Sicherheitsgurtes um beispielsweise 22 cm, also um mehr als das Doppelte des Bewegungsweges des Planetenzahnrades herbeigeführt werden.

Bei der Ausführung mit Planetengetriebe kann sich das Sonnenrad im normalen Betrieb unter dem Einfluß der üblicherweise vorgesehenen Rückzugsfeder bzw. der vom Insassen am Gurt ausgeübten Zugkräfte in dem durch den Gurtaufrollmechanismus gegebenen Grenzen ungehindert in beiden Richtungen verdrehen. Erst wenn eine unfallbedingte Beschleunigung auftritt und die Druckquelle ausgelöst wird, kommen der Innenzahnkranz, das Planetenzahnrad und das mit einer Außenverzahnung versehene Sonnenrad in Eingriff, und es wird nunmehr die erfindungsgemäße schlagartige Gurtstraffung durchgeführt.

Damit nach einer Auslösung der erfindungsgemäßen schlagartigen Gurtstraffunktion der normale Gurtaufrollmechanismus noch funktionsfähig ist, ist bei der Ausführung mit Planetengetriebe vorgesehen, daß der Planetenrad-Laufraum am Anfang und/oder am Ende eine Erweiterung aufweist, wo das Planetenzahnrad außer Eingriff mit dem Sonnenrad und/oder dem Innenzahnkranz kommt. Bleibt das Planetenrad z. B. zwischen Anfang und Ende seiner Umlaufbahn stehen, so wird es bei der normalen Funktion des Gurtaufrollmechanismus in der einen oder anderen Richtung bewegt, bis es am Anfang oder Ende seiner Laufbahn ankommt. Dort kommt es dann außer Eingriff mit zumindest einer der es umgebenden Verzahnungen, wodurch die Funktion des normalen Gurtaufrollmechanismus nicht durch das Anstoßen des Planetenzahnrades an eines der Enden seiner Umlaufbahn behindert wird. Bevorzugt soll hierzu im Bereich der Erweiterung der Innenzahnkranz nicht fortgesetzt sein.

In der mit Planetengetriebe versehenen Ausführung des Straffers kann der Eingriff des Planetenzahnrades in die ihm zugeordneten Verzahnungen auch dadurch herbeigeführt werden, daß das Planetenzahnrad bei Auslösung der Druckquelle aus einer beispielsweise verrasteten Ruheposition durch den im Druckraum aufgebauten Druck in eine Arbeitsposition verschoben wird, in der es mit dem Sonnenrad und dem Innenzahnkranz in Eingriff steht.

Eine weitere alternative Ausführungsform der mit dem Planetengetriebe versehenen erfindungsgemäßen Vorrichtung kennzeichnet sich dadurch, daß am Beginn des Innenzahnkranzes ein Innenzahnkranzsegment radial verschiebbar angeordnet ist und durch den Druck im Druckraum aus einer Ruheposition, wo es außer Eingriff mit dem Planetenzahnrad ist, in eine Arbeitsposition, wo es in Eingriff mit dem Planetenzahnrad steht und dieses auch ggf. in Eingriff mit dem Sonnenrad bringt, verschiebbar ist.

In einer anderen bevorzugten praktischen Ausführung der Erfindung wird ein mit seinem einen Ende an der Nabe befestigtes, eng um die Nabe gewickeltes und an seinem anderen Ende mit der Innenwand verbundenes Band durch die Druckbeaufschlagung entlang der Innenwand abgerollt, wobei durch die Abspul-Bewegung die Nabe gedreht wird.

In einer bevorzugten Ausführung der mit einem Band als kräfteübertragenden Mittel versehenen Strafferanordnung ist neben dem Band ein zusätzliches Dichtmittel vorgesehen, um eine verbesserte Abdichtung des Druckraumes durch eine Vergrößerung der Dichtfläche an den Stirnflächen zu erhalten.

In der Ausführung mit Band als kräfteübertragenden Mittel kann vorgesehen sein, daß ein Eingriff erst nach dem Auftreten einer Unfall-Beschleunigung über eine Drehkupplung erfolgt, wie sie z.B. in der DE-A-43 20 854 beschrieben ist.

Ein besonderer Vorteil beider Ausführungen besteht darin, daß die Wegvergrößerung bei sehr kompakter und an die Form des Gurtaufrollmechanismus angepaßter Bauweise erzielt wird.

Um die für das schlagartige Straffen des Gurtes erforderliche Einzugskraft von beispielsweise 1250 N zu erzielen, muß am kräfteübertragenden Dichtmittel, d.h. am Band oder am Planetenrad, eine wesentlich größere Kraft von z. B. 2500 N hervorgerufen werden, was mittels einer pyrotechnischen Ladung jedoch ohne weiteres möglich ist.

Die Erfindung wird im folgenden beispielsweise anhand der Zeichnung beschrieben; in dieser zeigt
- Fig. 1: eine schematische, teilweise geschnittene und auseinandergezogene, perspektivische Ansicht eines erfindungsgemäßen Gurtstraffers,
- Fig. 2: eine Ansicht des Gegenstandes der Fig. 1 in Richtung des Pfeiles II in nicht - auseinandergezogener Darstellung,
- Fig. 3: eine vergrößerte, aufgeschnittene, perspektivische Darstellung des Antriebes des Gurtstraffers nach den Fig. 1 und 2, wobei der Antrieb von der entgegengesetzten Seite, wie in Fig. 1 gezeigt ist,
- Fig. 4: eine Teilansicht des Gegenstandes der Fig. 3 unmittelbar nach Auslösung der Druckquelle,
- Fig. 5: eine zu Fig. 3 analoge Ansicht in einer Position unmittelbar am Beginn der Druckbeaufschlagung des Planetenzahnrades, wobei außerdem die Position des Planetenzahnrades am Ende seiner Laufbahn veranschaulicht ist,
- Fig. 6: einen Ausschnitt einer weiteren Ausführungsform im Bereich des Beginns des Planetenrad-Laufraumes,
- Fig. 7: eine entsprechende Ansicht wie in Fig. 6 einer weiteren Ausführungsform,
- Fig. 8: eine Teilansicht einer weiteren Ausführungsform des Antriebes eines erfindungsgemäßen Gurtstraffers,
- Fig. 9: eine perspektivische Teilansicht einer weiteren Ausführungsform des Antriebes eines erfindungsgemäßen Gurtstraffers bei abgenommenem Deckel in einer Position, wie sie unmittelbar nach Beginn der Druckbeaufschlagung eingenommen wird, und
- Fig.10: eine perspektivische Teilansicht einer Weiterbildung der Ausführungsform nach Fig. 9.

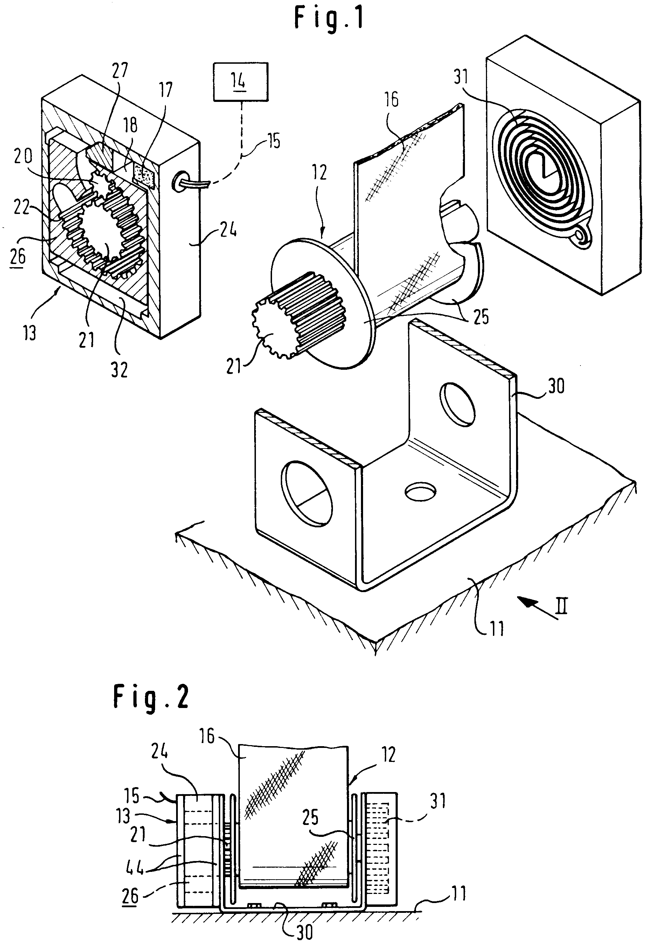

Die Figuren 1 bis 8 beschreiben die erfindungsgemäße Ausführung eines Gurtstraffers mit einem Planetengetriebe.

Nach den Figuren 1 und 2 ist ein Gurtaufrollmechanismus 12 mittels einer Halterung 30 am Chassis 11 eines Kraftfahrzeuges befestigt. Der Gurtaufrollmechanismus 12 weist eine Gurtrolle 25 auf, auf welche mittels einer an einem Ende der Halterung 30 angeordneten Spiralfederanordnung 31 ein Sicherheitsgurt 16 soweit aufgerollt werden kann, daß er mit einer Zugkraft zwischen 2 und 22 N am Körper eines Insassen, der den Sicherheitsgurt 16 angelegt hat, zur Anlage kommt.

An der von der Spiralfederanordnung 31 abgewandten Stirnseite weist der Gurtaufrollmechanismus 12 ein mit einer Außenverzahnung versehenes Sonnenrad 21 auf, welches axial in ein durch zwei ebene Stirnwände 44 abgeschlossenes Gehäuse 24 eines Antriebs 13 eingreift. Der Anschaulichkeit halber ist das Sonnenrad 21 in Fig. 1 außer in seiner Position innerhalb des Gehäuses 24 auch noch in seiner koaxialen Anordnung an der Gurtrolle 25 - also doppelt - gezeigt.

In der in den Fig. 1 und 2 veranschaulichten Ruhelage kann sich das Sonnenrad 21 innerhalb des Gehäuses 24 frei drehen, so daß der Gurtaufrollmechanismus 12 seine normale Rückzugs- bzw. Auszugsfunktion ausführen kann.

Im Fahrzeug ist an geeigneter Stelle ein in Fig. 1 angedeuteter Beschleunigungssensor 14 befestigt, der über eine Steuerleitung 15 mit einer im Gehäuse 24 angeordneten Druckquelle 17 verbunden, die zweckmäßigerweise durch eine pyrotechnische Ladung realisiert wird, welche bei Auftreten eines unfallbedingten Beschleunigungssignals am Ausgang des Beschleunigungssensors 14 gezündet wird.

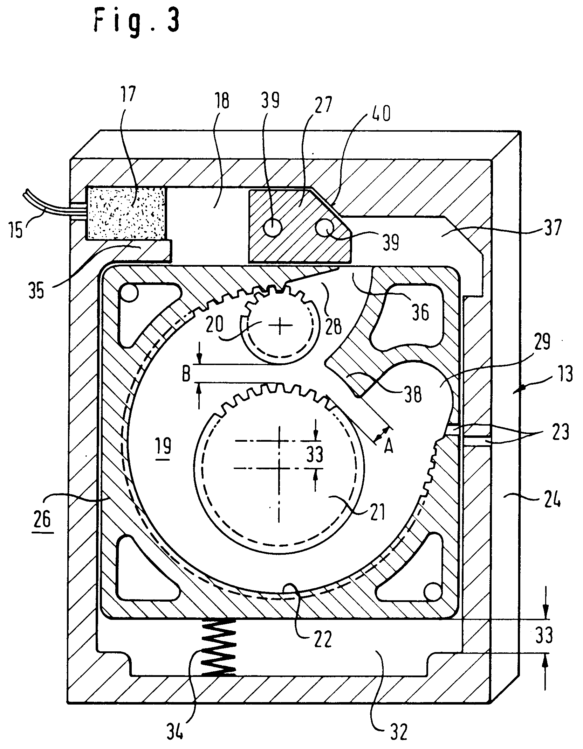

Nach Fig. 3 ist innerhalb des an der Halterung 30 (Fig. 1,2) befestigten Gehäuses 24 ein im wesentlichen quaderförmiger Schieber-Aufnahmeraum 32 vorgesehen, innerhalb dessen ein über einen begrenzten Weg 33 auf und ab verschiebbarer Schieber 26 angeordnet ist. Durch eine Feder 34 ist der Schieber 26 in seine in Fig. 1 und 3 gezeigte obere Stellung verschiebbar, wo er an einem Vorsprung 35 des Gehäuses 24 anliegt.

Der quaderförmige Schieber 26 weist einen das in ihm angeordnete Sonnenrad 21 exzentrisch umgebenden Planetenrad-Laufraum 19 auf, der an seinem radialen Außenumfang durch einen am Schieber 26 vorgesehenen Innenzahnkranz 22 begrenzt ist. Oben geht der Planetenrad-Laufraum 19 über einen Kanal 36 in einen Aufnahmeraum 37 des Gehäuses 24 über.

Ausgehend vom unteren Ende des Kanals 36 erstreckt sich der Planetenrad-Laufraum 19 um etwa 310° um das Sonnenrad 21 herum. Am Ende des Planetenrad-Laufraums 19 ist ein schieberfester radial nach innen gerichteter Druckabdichtungsvorsprung 38 vorgesehen, welcher jedoch in der Position nach Fig. 1 entsprechend der Exzentrizität einen Abstand A vom Umfang des Sonnenrades 21 aufweist. Oberhalb des Schiebers 26 ist im Gehäuse 24 ein Druckraum 18 vorgesehen, an dessen linken Ende die pyrotechnische Ladung 17 als Druckquelle angeordnet ist. An dem der pyrotechnischen Ladung 17 entgegengesetzten Ende des Druckraumes 18 ist ein Ventil-Verschiebe-Glied 27 angeordnet, welches mittels Scherstiften 39 mit dem Gehäuse 24 verbunden ist und als Keil ausgebildet ist, der sich in Anlage an einer keilförmigen Verengung 40 am Ende des Druckraumes 18 befindet. Die Verengung 40 geht in den Aufnahmeraum 37 über. Der Kanal 36 grenzt an das von der pyrotechnischen Ladung 17 abgewandte Ende des Ventil-Verschiebe-Gliedes 27 an.

Am Ende des Planetenrad-Laufraumes 19 sind in der Wand des Schiebers 26 und des Gehäuses 24 Entlüftungsbohrungen 23 vorgesehen.

Am Anfang und Ende weist der Planetenrad-Laufraum 19 Erweiterungen 28 bzw. 29 auf, durch die der Planetenrad-Laufraum 19 in diesen Bereichen so erweitert wird, daß ein im Planetenrad-Laufraum 19 angeordnetes Planetenzahnrad 20 dort außer Eingriff mit dem Sonnenrad 21 bzw. dem Innenzahnkranz 22 ist.

Das Planetenzahnrad 20 ist nach Fig. 3 drehbar am Schieber 26 befestigt und steht mit dem Beginn des Innenzahnkranzes 22 in Eingriff. Von der Außenverzahnung des Sonnenrades 21 weist das Planetenzahnrad 20 einen Abstand B auf, der z. B. 1 mm betragen kann.

Das Gehäuse 24 ist an beiden Stirnseiten durch nur in Fig. 2 angedeuteten Deckel 44 so verschlossen, daß die Räume 18, 36, 37 nach außen druckdicht abgedichtet sind.

Die Funktion des beschriebenen Antriebes 13 ist wie folgt:

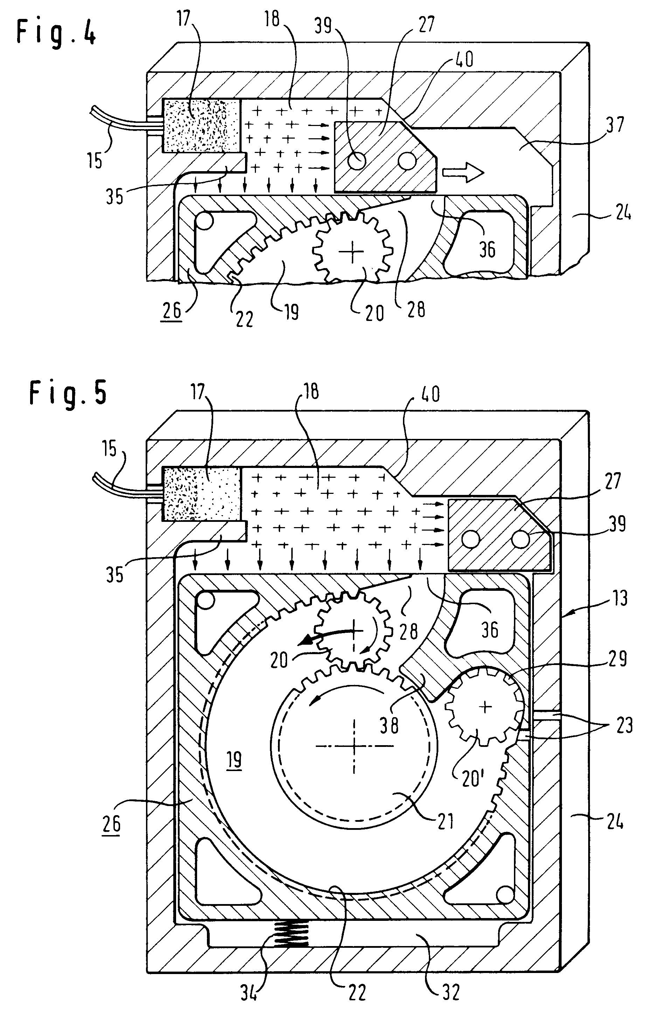

Sobald der Beschleunigungssensor 14 nach Fig. 1 ein unfallbedingtes Beschleunigungssignal über die Steuerleitung 15 an die pyrotechnische Ladung 17 abgibt, zündet diese und erzeut im Druckraum 18 einen hohen Explosionsdruck. Dieser beaufschlagt gleichzeitig den Schieber 26 nach unten und das Ventil-Verschiebe-Glied 27 nach rechts in Fig. 1. Aufgrund des hohen Druckes werden die Scherstifte 39 abgeschert, und das Ventil-Verschiebe-Glied bewegt sich nach rechts, wie das in Fig. 4 angedeutet ist. Gleichzeitig verschiebt sich der Schieber 26 aufgrund unmittelbarer Druckeinwirkung und der Keilwirkung des Ventil-Verschiebe-Gliedes 27 gegen die Kraft der Feder 34 nach unten, wodurch der Innenzahnkranz 22 mit dem Sonnenrad 21 konzentrisch wird und das Planetenzahnrad 20 mit dem Sonnenrad 21 in Eingriff kommt. Bis jetzt ist das Planetenzahnrad 20 noch vom Explosionsdruck frei, so daß das Schalten lastfrei erfolgt. Erst anschließend erreicht das Ventil-Verschiebe-Glied 27 die aus Fig. 5 ersichtliche Position, in welcher der Druckraum 18 nunmehr über den Kanal 36 mit dem Beginn des Planetenrad-Laufraums 19 in Verbindung steht. Der Explosionsdruck kann nunmehr das sowohl mit dem Innenzahnkranz 22 als auch mit dem Sonnenrad 21 kämmende Planetenzahnrad 20 beaufschlagen und dieses entgegen dem Uhrzeigersinn auf einer Umlaufbahn um die Achse des Sonnenrades 21 bewegen. Durch die Verschiebung des Schiebers 26 aus der Position von Fig. 3 in die Stellung nach Fig. 5 wird außerdem der Abstand A zwischen dem Druckabdichtungsvorsprung 38 und dem Umfang des Sonnenrades 21 auf ein Minimum reduziert, so daß der Druck im Druckraum 18 durch den Druckabdichtungsvorsprung 38 gehindert wird, auf direktem Wege in den Planetenrad-Laufraum 19 einzutreten. Das Planetenrad 20 rollt nun auf dem Innenzahnkranz 22 ab und treibt dabei das Sonnenrad 21 in Pfeilrichtung zu einer Drehbewegung an. Aufgrund der Planetenradübersetzung dreht sich das Sonnenrad 21 wesentlich schneller, als das Planetenzahnrad 20 um dessen Achse umläuft.

Sobald der Gurt 16 straff am Körper des Insassen anliegt, endet die Bewegung des Planetenzahnrades 20 auf seiner Umlaufbahn. Nunmehr tritt der normale, in den Zeichnungen nicht dargestellte Sperrmechanismus des Gurtaufrollmechanismus 12 in Funktion, welcher das Ausziehen des Sicherheitsgurtes 16 beim Auftreten von Fahrzeugbeschleunigungen unterbindet.

Sobald der Druck im Druckraum 18 abgeklungen ist, kann der Gurtaufrollmechanismus 12 in üblicher Weise betätigt werden, wobei das Planetenrad zwischen dem Sonnenrad 21 und dem Innenzahnkranz 22 frei abrollt. An den Enden des Planetenrad-Laufraums 19 gelangt das Planetenzahnrad 20 in den Bereich der Erweiterungen 28 oder 29, wo es außer Eingriff mit wenigstens einer der Verzahnungen kommt, so daß das Sonnenrad 21 auch in diesen Positionen des Planetenzahnrades 20 frei drehbar bleibt und die normale Funktion des Gurtaufrollmechanismus 12 nicht behindert wird. In Fig. 5 ist das Planetenzahnrad 20 zum einen in seiner Position am Anfang seiner Umlaufbahn und ein zweitesmal bei 20' am Ende der Umlaufbahn 20 dargestellt.

In den folgenden Figuren bezeichnen gleiche Bezugszahlen entsprechende Bauteile wie in den Fig. 1 bis 5.

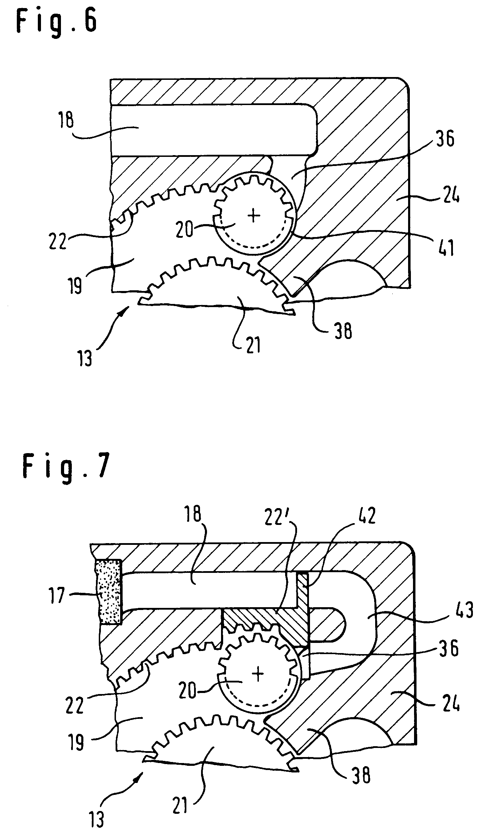

Bei dem Ausführungsbeispiels nach Fig. 6 ist kein Schieber 26 vorgesehen; vielmehr sind sowohl das Sonnenrad 21 als auch der Innenzahnkranz 22 am Gehäuse 24 von vornherein konzentrisch zueinander angeordnet. Außerdem befindet sich der Druckabdichtungsvorsprung 38 stets in einem abdichtenden minimalen Abstand vom Außenumfang des Sonnenrades 21.

Weiter entfällt beim Ausführungsbeispiel nach Fig. 6 das Ventil-Schiebe-Glied 27. Stattdessen ist das Planetenzahnrad 20 in der Ruheposition in einer Rastvertiefung 41 am Beginn der Planetenradlaufbahn 19 untergebracht. Die Rastausnehmung 41 steht über den Kanal 36 mit dem Druckraum 18 in Verbindung. Bei Anordnung innerhalb des Aufnahmeraums 41 ist das Planetenzahnrad 20 außer Eingriff mit dem Sonnenrad 21.

Wird im Druckraum 18 ein Druck aufgebaut, so wird das Planetenzahnrad 20 aus der Rastvertiefung 41 hinaus in Eingriff mit dem Sonnenrad 21 und dem Innenzahnkranz 22 gedrückt, worauf die vorstehend anhand der Fig. 1 bis 5 beschriebene Funktion stattfindet.

Auch Fig. 7 zeigt ein Ausführungsbeispiel, bei dem das Sonnenrad 21 und der Innenzahnkranz 22 von vornherein konzentrisch zueinander am Gehäuse 24 angeordnet sind. In diesem Fall beaufschlagt der Druck im Druckraum 18 ein am Anfang des Planetenrad-Laufraumes 19 vorgesehenes, radial verschiebliches Innenzahnkranzsegment 22', welches einen Ventilvorsprung 42 aufweist, der zunächst den Druck im Druckraum 18 vom Anfang des Planetenrad-Laufraums 19 fernhält.

Im Falle einer Zündung der Ladung 17 wird zunächst das Innenzahnkranzsegment 22' im wesentlichen radial auf das Sonnenrad 21 zubewegt, wobei das am Innenzahnsegment gehaltene Planetenzahnrad 20 in Eingriff mit dem Sonnenrad 21 gebracht wird. Gleichzeitig kommt das Innenzahnradsegment 22' in periphere Ausrichtung mit dem fest angeordneten Innenzahnkranz 22. Da mit dem radialen Nach-Innen-Verschieben des Innenzahnkranzsegments 22' auch das Ventilglied 42 einen U-förmigen Druckkanal 43 freigibt, kann nunmehr wieder der im Druckraum 18 herrschende Druck durch den Kanal 36 an das in Eingriff mit den Verzahnungen des Innenzahnkranzes 22 und des Sonnenrades 21 stehenden Planetenzahnrades 20 weitergeleitet werden.

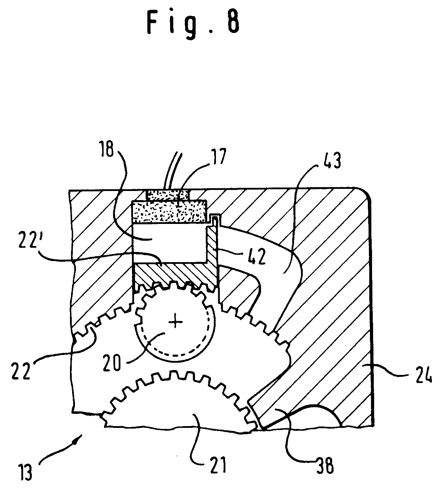

Fig. 8 zeigt eine ähnliche Ausführungsform, wobei jedoch die pyrotechnische Ladung 17 über dem Zahnsegment 22' angeordnet ist und das Planetenzahnrad 20 in der Ruheposition, z.B. durch nicht gezeigte magnetische Mittel bzw. Ausbildung am Innenzahnsegment 22' gehalten wird.

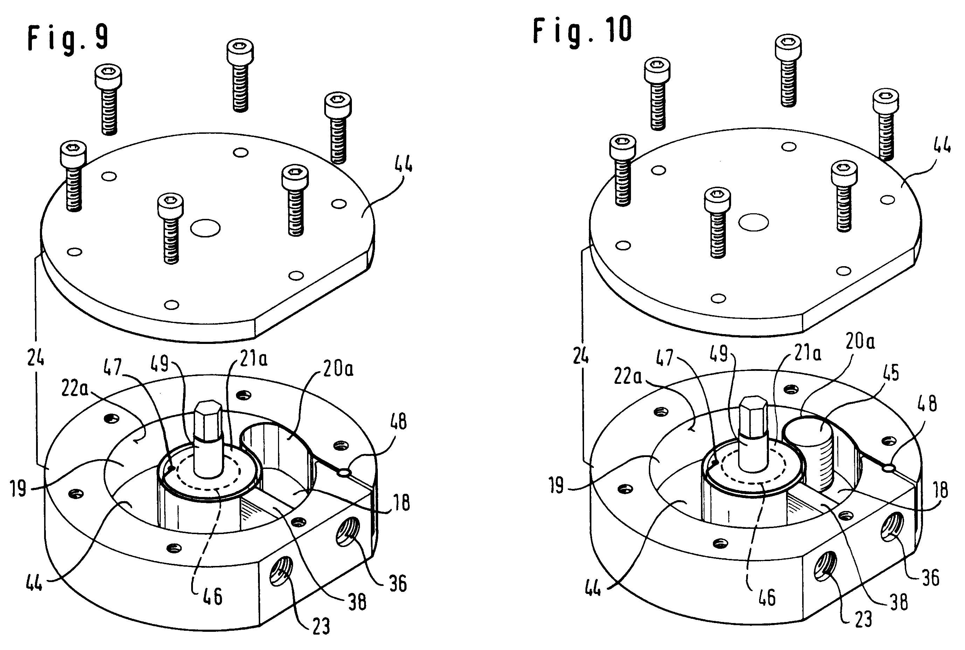

Eine weitere Ausführungsform ist in Fig. 9 gezeigt, welche nur den wesentlichen Teil des Gurtstraffers wiedergibt. Der Gurtstraffer weist in einem Gehäuse 24 als kräfteübertragendes Dichtmittel ein sich über die Breite der Räume 18,19 erstreckendes Band 20a auf, das mit seinem einen Ende an einer Befestigungsstelle 47 an der Nabe 21a befestigt ist, auf diese in der Richtung aufgewickelt ist, daß sich beim Abziehen des Bandes 20a die Nabe 21a in der Gurtaufwickelrichtung dreht und von seinem äußeren Ende des aufgewickelten Teils von der Nabe 21a in einem von dem Kanal 36 wegweisenden 180°-Bogen zur glatt ausgebildeten Innenwand 22a geführt ist, an der anliegend es dann zu einer Befestigungsstelle 48 am Anfang des Laufraumes 19 neben dem Kanal 36 geführt ist, wo sein anderes Ende befestigt ist.

Das Gehäuse 24 ist ähnlich wie nach Fig. 2 mit zwei ebenen Stirnwänden 44 verschlossen, von denen eine als in abgenommener Form dargestellter, anschraubbarer Deckel ausgebildet ist, und an denen von innen die Ränder des Bandes 20a anliegen, so daß vor dem 180°-Bogen der nach außen druckdicht abgeschlossene, mit dem Druckraum 18 verbundene Teil und hinter dem 180°-Bogen der entlüftete Teil des Laufraumes 19 gebildet ist.

Normalerweise ist zwischen dem Band 20a und einer von der Nabe 21a axial vorstehenden Antriebswelle 49, die mit der Gurtrolle 25 drehfest gekuppelt zu denken ist, eine nur gestrichelt angedeutete Kupplung 46 vorgesehen, die normalerweise ausgerückt ist und in nicht dargestellter Weise bei unfallbedingten Beschleunigungen eingerückt wird. Die Kupplung könnte jedoch auch zwischen der Antriebswelle 49 und der Gurtaufrolle 25 vorgesehen sein.

Die in Figur 10 gezeigte Ausführung weist im 180°-Bogen des Bandes 20a einen zusätzlichen Dichtzylinder 45 auf, dessen flache Stirnflächen mit den Wänden 44 in gleitendem Dichteingriff stehen. Hierdurch wird eine bessere stirnseitige Abdichtung der beiden Teile des Laufraumes 19 erreicht.

In beiden Fällen kann die Kupplung so ausgebildet sein, daß der Eingriff eine hinreichende Zeit nach der unfallbedingten Straffung wieder aufgehoben wird.

Die Wirkung der in den Fig. 9 und 10 dargestellten Ausführungen ist wie folgt:

In der Ausgangslage ist das Band 20a maximal auf die Nabe 21a aufgewickelt und der 180°-Bogen befindet sich nahe und gegenüber dem Kanal 36. Auf diese Weise weist der zwischen dem Band 20a, dem druckabdichtenden Vorsprung 38, der Innenwand 22a sowie den Stirnwänden 44 vorhandene, vom Kanal 36 beaufschlagbare Druckraum 18 sein minimales Volumen auf.

Es ist in der Ausgangslage jedoch auch möglich, daß das Band 20a noch keinen 180°-Bogen aufweist, sondern im wesentlichen geradlinig von der Nabe 21a zur Innenwand an die oder nahe zu der Befestigungsstelle 48 geführt wird.

Wenn dann eine unfallbedingte Beschleunigung auftritt, wird die Druckquelle 17 ausgelöst und die Kupplung 46 zwischen dem Band 20a und dem Gurtaufrollmechanismus 12 eingerückt.

Die von der pyrotechnischen Ladung 17 gebildeten Treibgase strömen durch den Kanal 36 in den Druckraum 18, so daß der Druck hier größer als in dem von der Druckquelle abgewandten Teil des Laufraumes ist. Diese Druckdifferenz bewirkt eine in Umfangsrichtung vom Kanal 36 weggerichtete Kraft auf den 180°-Bogen des Bandes 20a, wodurch, da das Band 20a bei der Befestigungsstelle 48 am Gehäuse festgehalten ist, ein Drehmoment entgegen dem Uhrzeigersinn auf die Nabe 21a ausgeübt und die Nabe 21a zu einer entsprechenden Drehbewegung mitgenommen wird. Bei dieser Drehbewegung der Nabe 21a wird über die Kupplung 46 die Gurtrolle 25 in die gurtstraffende Richtung gedreht und es wickelt sich gleichzeitig das auf die Nabe aufgewickelte, an seinem anderen Ende bei der Befestigungsstelle 48 festgehaltene Band ab, wobei sich unter dem Einfluß der Druckdifferenz das Band 20a im teilkreisförmigen Laufraum 19 über eine während dieses Vorganges größer werdende Strecke ausgehend von der Befestigungsstelle 48 an die Innenwand 22a anschmiegt. Der 180°-Bogen durchläuft dabei den Laufraum 19 entgegen dem Uhrzeigersinn.

Die Figuren 9 und 10 zeigen den Gurtstraffer kurz nach Beginn der Druckbeaufschlagung, wo der 180°-Bogen erst einen kleinen Teil des Laufraumes durchlaufen hat.

Für den Fall, daß das Band 20a in der Ausgangslage geradlinig von der Nabe 21a zur Innenwand 22a nahe der Befestigungsstelle 48 geführt ist, wird sich zu Beginn der Druckbeaufschlagung unter abwickelnder Drehung der Nabe zunächst der 180°-Bogen ausbilden, und sich dann wie oben beschrieben durch den Laufraum 19 bewegen.

Der Dichtzylinder 45 nnach Fig. 10 führt, während der Bewegung des 180°-Bogens durch den Laufraum 19 eine Abrollbewegung auf dem an die Innenwand 22a angeschmiegten Bandteil aus. In diesem Fall wird die Druckkraft über den Dichtzylinder 45 auf den 180°-Bogen übertragen.

Die Strecke, um die das Band 20a abgewickelt wird, entspricht im wesentlichen dem Produkt aus dem Laufwinkel des Scheitels des 180°-Bogens (in rad) und dem Innenwanddurchmesser. Der Drehwinkel, um den die Nabe 21a gedreht wird, ergibt sich aus dem Quotienten dieser Größe und dem Nabendurchmeser. Damit ist der Drehwinkel der Nabe um das Verhältnis von Innenwanddurchmesser zu Nabendurchmesser vergrößert.

## Patentansprüche

1. Gurtstraffer bei Sicherheitsgurtanordnungen in Kraftfahrzeugen mit
einem am Fahrzeugchassis (11) befestigten und mit einer Rückzugsfederanordnung (31) und Beschleunigungs-Feststellvorrichtung versehenen Gurtaufrollmechanismus (12),
einem in Gurtaufrollrichtung arbeitenden Antrieb (13) für den Gurtaufrollmechanismus (12), und
einem Beschleunigungssensor (14), der auf bei einem Unfall auftretende Beschleunigungen anspricht und mit dem Antrieb (13) in Auslöseverbindung (15) steht, derart, daß
beim Auftreten einer Unfall-Beschleunigung der Antrieb (13) ausgelöst wird und dadurch der Gurtaufrollmechanismus (12) den Gurt (16) schlagartig um ein vorbestimmtes Stück einrollt, das ausreicht, den Gurt (16) fest an den von ihm gehaltenen Insassen anzulegen, wobei
der Antrieb (13) aufweist
eine beim Ansprechen des Beschleunigungssensors (14) auslösbare Druckquelle (17), insbesondere pyrotechnische Ladung, welche bei Auslösung in einem Druckraum (18) schlagartig einen hohen Druck aufbaut,
einen an seinem Anfang über einen Druckkanal (36) mit dem Druckraum (18) verbundenen oder verbindbaren, zumindest annähernd druckdicht verschlossenen, teilkreisförmigen Laufraum (19), und
ein kräfteübertragendes Dichtmittel (20), welches
in dem Laufraum (19) angeordnet ist oder angeordnet werden kann,
den Laufraum (19) in Umfangsrichtung in zwei druckdicht voneinander getrennte Räume unterteilt, von denen einer druckmäßig mit dem Druckraum (18) verbunden ist, und
spätestens unmittelbar nach der Auslösung zumindest über einen Teil, vorzugsweise über den größten Teil des teilkreisförmigen Umfanges des Laufraumes (19) beweglich ist,
radial innen mit einer mit dem Gurtaufrollmechanismus (12) drehfest gekuppelten oder spätestens unmittelbar nach der Auslösung drehfest kuppelbaren zentralen Nabe (21) in Eingriff steht, und
vor der Auslösung nahe dem Druckraum (18) angeordnet ist und beim Auftreten von Druck im Druckraum (18) nach Auslösung der Druckquelle (17) unter Bewegung entlang der feststehenden Innenwand (22) und Drehung der mit dem Gurtaufrollmechanismus (12) drehfest gekuppelten zentralen Nabe (21) den Laufraum (19) um eine erhebliche Strecke durchläuft, wobei
die axialen Stirnseiten des kräfteübertragenden Dichtmittels (20), der Nabe (21) und der Innenwand (22) mit gehäusefesten Wänden (44), von denen vorzugsweise eine ein abnehmbarer Deckel ist, in dichtendem Eingriff stehen,
dadurch **gekennzeichnet,**
daß das Dichtmittel (20) radial außen mit der in Umfangsrichtung feststehenden teilkreisförmigen Innenwand (22) in Eingriff steht, indem die teilkreisförmige Innenwand als Innenzahnkranz (22), die zentrale Nabe als verzahntes Sonnenrad (21) und das kräfteübertragende Dichtmittel als vorzugsweise erst bei Auslösung mit dem Innenzahnkranz (22) und dem Sonnenrad (21) in Eingriff stehendes Planetenzahnrad (20) ausgebildet ist.

2. Gurtstraffer nach Anspruch 1,
dadurch **gekennzeichnet,**
daß das kräfteübertragende Dichtmittel (20) zunächst außer Eingriff mit der teilkreisförmigen Innenwand (22) und/oder der Nabe (21), vorzugsweise der Nabe (21) ist, bzw. die Nabe (21) außer Eingriff mit dem Gurtaufrollmechanismus (12) ist, und erst beim Auftreten der Unfall-Beschleunigung unmittelbar vor der, gleichzeitig mit der oder insbesondere durch die Auslösung der Druckquelle (17) dieser Eingriff hergestellt wird, und zwar bevor der Druckaufbau im Laufraum (19) vor dem kräfteübertragenden Dichtmittel (20) so groß ist, daß das kräfteübertragende Dichtmittel (20) um eine erhebliche Strecke auf seiner Umlaufbahn um die Achse der Nabe (21) bewegt wird.

3. Gurtstraffer nach Anspruch 1 oder 2,
dadurch **gekennzeichnet,**
daß die teilkreisförmige Innenwand (22) sowie vorzugsweise auch das kräfteübertragende Dichtmittel (20) an einem Schieber (26) angeordnet ist, der durch den Druck der ausgelösten Druckquelle (17) aus einer Ruheposition in eine Arbeitsposition verschiebbar ist, wobei in der Ruheposition die teilkreisförmige Innenwand (22) vom kräfteübertragenden Dichtmittel (20) bzw. das kräfteübertragende Dichtmittel (20) von der zentralen Nabe (21) oder die Nabe (21) vom Gurtaufrollmechanismus (12) außer Eingriff ist und in der Arbeitsposition ein Eingriff hergestellt ist.

4. Gurtstraffer nach Anspruch 3,
dadurch **gekennzeichnet,**
daß am Druckraum (18) ein Ventil-Verschiebe-Glied (27) vorgesehen ist, welches in der Ruheposition den Druckraum (18) vom Laufraum (19) trennt und bei Druckbeaufschlagung durch die Druckquelle (17) bevorzugt den Schieber (26) in die Arbeitsposition überführt und erst dann die Verbindung zwischen dem Druckraum (18) und dem Laufraum (19) freigibt.

5. Gurtstraffer nach einem der vorhergehenden Ansprüche,
dadurch **gekennzeichnet,**
daß der Planetenrad-Laufraum (19) am Anfang und/oder am Ende eine Erweiterung (28, 29) aufweist, wo das Planetenzahnrad (20) außer Eingriff mit dem Sonnenrad (21) und/oder dem Innenzahnkranz (22) kommt.

6. Gurtstraffer nach einem der vorhergehenden Ansprüche,
dadurch **gekennzeichnet,**
daß im Bereich der Erweiterung (28, 29) der Innenzahnkranz (22) nicht fortgesetzt ist.

7. Gurtstraffer nach einem der vorhergehenden Ansprüche,
dadurch **gekennzeichnet,**
daß das Planetenzahnrad (20) bei Auslösung der Druckquelle (17) aus einer beispielsweise verrasteten Ruheposition, in der es zweckmäßigerweise schon mit dem Innenzahnkranz (22) in Eingriff steht, durch den im Druckraum (18) aufgebauten Druck in eine Arbeitsposition verschoben wird, in der es mit dem Sonnenrad (21) und dem Innenzahnkranz (22) in Eingriff steht.

8. Gurtstraffer nach einem der vorhergehenden Ansprüche,
dadurch **gekennzeichnet,**
daß am Beginn des Innenzahnkranzes (22) ein Innenzahnkranzsegment (22') radial verschiebbar angeordnet ist und durch den Druck im Druckraum (18) aus einer Ruheposition, wo es außer Eingriff mit dem Planetenzahnrad (20) ist, in eine Arbeitsposition, wo es in Eingriff mit dem Planetenzahnrad (20) steht und dieses auch ggf. in Eingriff mit dem Sonnenrad (21) bringt, verschiebbar ist.

9. Gurtstraffer bei Sicherheitsgurtanordnungen in Kraftfahrzeugen mit
einem am Fahrzeugchassis (11) befestigten und mit einer Rückzugsfederanordnung (31) und Beschleunigungs-Feststellvorrichtung versehenen Gurtaufrollmechanismus (12),
einem in Gurtaufrollrichtung arbeitenden Antrieb (13) für den Gurtaufrollmechanismus (12), und
einem Beschleunigungssensor (14), der auf bei einem Unfall auftretende Beschleunigungen anspricht und mit dem Antrieb (13) in Auslöseverbindung (15) steht, derart, daß
beim Auftreten einer Unfall-Beschleunigung der Antrieb (13) ausgelöst wird und dadurch der Gurtaufrollmechanismus (12) den Gurt (16) schlagartig um ein vorbestimmtes Stück einrollt, das ausreicht, den Gurt (16) fest an den von ihm gehaltenen Insassen anzulegen, wobei
der Antrieb (13) aufweist
eine beim Ansprechen des Beschleunigungssensors (14) auslösbare Druckquelle (17), insbesondere pyrotechnische Ladung, welche bei Auslösung in einem Druckraum (18) schlagartig einen hohen Druck aufbaut,
einen an seinem Anfang über einen Druckkanal (36) mit dem Druckraum (18) verbundenen oder verbindbaren, zumindest annähernd druckdicht verschlossenen, teilkreisförmigen Laufraum (19), und
ein kräfteübertragendes Dichtmittel (20a; 20a, 45), welches
in dem Laufraum (19) angeordnet ist oder angeordnet werden kann,
den Laufraum (19) in Umfangsrichtung in zwei druckdicht voneinander getrennte Räume unterteilt, von denen einer druckmäßig mit dem Druckraum (18) verbunden ist, und
spätestens unmittelbar nach der Auslösung zumindest über einen Teil, vorzugsweise über den größten Teil des teilkreisförmigen Umfanges des Laufraumes (19) beweglich ist,
radial innen mit einer mit dem Gurtaufrollmechanismus (12) drehfest gekuppelten oder spätestens unmittelbar nach der Auslösung drehfest kuppelbaren zentralen Nabe (21a) in Eingriff steht, und
vor der Auslösung nahe dem Druckraum (18) angeordnet ist und beim Auftreten von Druck im Druckraum (18) nach Auslösung der Druckquelle (17) unter Bewegung entlang der feststehenden Innenwand (22a) und Drehung der mit dem Gurtaufrollmechanismus (12) drehfest gekuppelten zentralen Nabe (21a) den Laufraum (19) um eine erhebliche Strecke durchläuft, wobei
die axialen Stirnseiten des kräfteübertragenden Dichtmittels (20a; 20a, 45) der Nabe (21a) und der Innenwand (22a) mit gehäusefesten Wänden (44), von denen vorzugsweise eine ein abnehmbarer Deckel ist, in dichtendem Eingriff stehen,
dadurch **gekennzeichnet,**
daß das Dichtmittel (20a; 20a, 45) radial außen mit der in Umfangsrichtung feststehenden teilkreisförmigen Innenwand (22a) in Eingriff steht, indem das kräfteübertragende Dichtmittel ein sich mit seiner Breite über den Laufraum (19) erstreckendes Band (20a) umfaßt, das mit seinem einen Ende an einer Stelle (47) auf der Nabe (21a) befestigt ist, auf die Nabe (21a) in der Richtung aufgewickelt ist, daß sich beim Abwickeln die Nabe (21a) in Gurtaufrollrichtung dreht, dann je nach Drehstellung der Nabe (21a) geradlinig oder mehr oder weniger gekrümmt oder in einem 180°-Bogen zur Innenwand (22a) verläuft, an dieser spätestens nach einer gewissen Drehung der Nabe (21a) ein Stück in Richtung auf den Druckkanal (36) anliegt und mit seinem anderen Ende an einer Befestigungsstelle (48) des Gehäuses (24) vorzugsweise am Beginn des Laufraumes (19) befestigt ist.

10. Gurtstraffer nach Anspruch 9,
dadurch **gekennzeichnet,**
daß in dem 180°-Bogen ein Dichtzylinder (45) angeordnet ist, dessen flache Stirnseiten mit den Wänden (44) in gleitendem Dichteingriff stehen.

11. Gurtstraffer nach Anspruch 9 oder 10,
dadurch **gekennzeichnet,**
daß zwischen dem einen Ende des Bandes (20a) und dem Gurtaufrollmechanismus (12) eine normalerweise ausgerückte Kupplung (46) vorgesehen ist, welche erst bei einer unfallbedingten Beschleunigung eingerückt wird.

12. Gurtstraffer nach Anspruch 11,
dadurch **gekennzeichnet,**
daß die Kupplung (46) so ausgebildet ist, daß der Eingriff eine hinreichende Zeit nach der unfallbedingten Straffung wieder aufgehoben wird.

13. Gurtstraffer nach einem der vorhergehenden Ansprüche,
dadurch **gekennzeichnet,**
daß der von dem Druckraum (18) abgewandte Teil des Laufraumes (19) an oder nahe an seinem Ende mit einer Entlüftung versehen ist.

14. Gurtstraffer nach einem der vorhergehenden Ansprüche,
dadurch **gekennzeichnet,**
daß die Nabe (21; 21a) koaxial mit der Gurtrolle (25) des Gurtaufrollmechanismus (12) ist.

15. Gurtstraffer nach einem der vorhergehenden Ansprüche,
dadurch **gekennzeichnet,**
daß die Nabe (21; 21a) und evtl. auch das mit ihr in Eingriff stehende oder bringbare kräfteübertragende Dichtmittel (20; 20a; 20a, 45) drehbar, aber unverschiebbar in einem am Chassis (12) befestigten Gehäuse (24) angeordnet ist.

## Claims

1. Belt tensioner for safety belt arrangements in motor vehicles, comprising
a belt winding reel mechanism (12) secured to the vehicle chassis (11) and provided with a retraction spring arrangement (31) and an acceleration detection device,
a drive (13) for the belt winding reel mechanism (12) and operating in the belt winding up direction, and
an acceleration sensor (14) which responds to accelerations which occur during an accident and stands in triggering connection (15) with the drive (13) in such a way that
on the occurrence of an accident acceleration the drive (13) is triggered and the belt winding reel mechanism (12) thereby abruptly winds in the belt (16) by a certain amount, which is sufficient to apply the belt (16) tightly against the occupant held by it, wherein
the drive (13) has
a pressure source (17), which can be triggered on response of the acceleration sensor (14), in particular a pyrotechnical charge, which on being triggered abruptly builds up a high pressure in the pressure chamber (18),
a partly circular running chamber (19), which is connected or connectable at its periphery via a pressure channel (36) to the pressure chamber (18) and is at least approximately closed in a pressure-tight manner, and
a force transmitting sealing means (20), which
is arranged or can be arranged in the running chamber (19),
divides the running chamber (19) in the circumferential direction into two chambers, which are sealed from one another in a pressure-tight manner, of which one chamber is connected pressure-wise to the pressure chamber (18),
and is moveable at the latest directly after the triggering over a part, preferably over the greatest part of the part circular periphery of the running chamber (19),
stands radially inwardly in engagement with a central hub (21), which is rotationally fixedly connected to the belt winding reel mechanism (12), or is at the latest rotationally fixedly connectable therewith after the triggering, and
is arranged before the triggering as close as possible to the pressure chamber (18), and runs, on the occurrence of pressure in the pressure space (18) after the triggering of the pressure source (17), through a considerable distance through the running chamber (19) while moving along the fixed inner wall (22) and with rotation of the central hub (21), which is rotationally fixedly connected to the belt winding reel mechanism (12), wherein
the axial end faces of the force transmitting sealing means (20), the hub (21) and the inner wall (22) stand in a sealing engagement with fixed walls (44) of the housing, of which one is preferably a removable cover,
characterised in that
the sealing means (20) stands radially outwardly in engagement with the part circular inner wall (22) which is stationary in the peripheral direction, in that the part circular inner wall is formed as an inner toothed ring (22), the central hub is formed as a toothed cylinder (21) and the force transmitting sealing means is formed as a planetary gearwheel (20), which preferably first stands in engagement with the inner toothed ring (22) and the sunwheel (21) when triggering occurs.

2. Belt tensioner in accordance with claim 1, characterised in that the force transmitting sealing means (20) is initially out of engagement with the part circular inner wall (22) and/or the hub (21), preferably the hub (21), or the hub (21) is out of engagement with the belt winding reel mechanism (12) and this engagement is first produced on the occurrence of the accident acceleration directly prior to of simultaneously with the triggering of the pressure source (17), in particular through the triggering of the pressure source (17), and indeed before the pressure build-up in the running chamber (19) in front of the force transmitting sealing means (20) is so great that the force transmitting sealing means (20) is moved over a considerable distance on its path of rotation about the axis of the hub (21).

3. Belt tensioner in accordance with claim 1 or claim 2, characterised in that the part circular inner wall (22) and also preferably the force transmitting sealing means (20) is arranged at a slider (26), which is displaceable through the pressure of the triggered pressure source (17) out of a rest position into a working position, wherein, in the rest position, the part circular inner wall (22) is out of engagement with the force transmitting sealing means (20) or the force transmitting sealing means (20) is out of engagement with the central hub (21) or the hub (21) is out of engagement with the belt winding reel mechanism (12) and an engagement is produced in the working position.

4. Belt tensioner in accordance with claim 3, characterised in that a valve displacing member (27) is provided at the pressure chamber (18), which, in the rest position, separates the pressure chamber (18) from the running chamber (19) and, on pressurisation by the pressure source (17), preferentially transfers the slider (26) into the working position and only then frees the connection between the pressure chamber (18) and the running chamber (19).

5. Belt tensioner in accordance with one of the preceding claims, characterised in that the planetary wheel running space (19) has a broadened portion (28, 29) at the start and/or at the end, where the planetary wheel (20) comes out of engagement with the sunwheel (21) and/or the inner toothed ring (22).

6. Belt tensioner in accordance with one of the preceding claims, characterised in that the inner toothed ring (22) is not continued in the region of the broadened portion (28, 29).

7. Belt tensioner in accordance with one of the preceding claims, characterised in that the planetary gearwheel (20) is displaced on triggering of the pressure source (17) from a, for example, latched rest position in which it expediently already stands in engagement with the inner toothed ring (22) by the pressure built up in the pressure chamber (18) into a working position in which it is in engagement with the sunwheel (21) and the inner toothed ring (22).

8. Belt tensioner in accordance with one of the preceding claims, characterised in that an inner toothed ring segment (22') is radially displaceably arranged at the start of the inner toothed ring (22) and is displaceable by the pressure in the pressure chamber (18) out of a rest position, where it is out of engagement with the planetary gearwheel (20) into a working position, where it stands in engagement with the planetary gearwheel (20), and also brings the latter into engagement with the sunwheel (21), if required.

9. Belt tensioner for safety belt arrangements in motor vehicles, comprising
a belt winding reel mechanism (12) secured to the vehicle chassis (11) and provided with a retraction spring arrangement (31) and an acceleration detection device,
a drive (13) for the belt winding reel mechanism (12) and operating in the belt winding up direction, and
an acceleration sensor (14) which responds to accelerations which occur during an accident and stands in triggering connection (15) with the drive (13) in such a way that
on the occurrence of an accident acceleration the drive (13) is triggered and the belt winding reel mechanism (12) thereby abruptly winds in the belt (16) by a certain amount, which is sufficient to apply the belt (16) tightly against the occupant held by it, wherein
the drive (13) has
a pressure source (17), which can be triggered on response of the acceleration sensor (14), in particular a pyrotechnical charge, which on being triggered abruptly builds up a high pressure in the pressure chamber (18),
a partly circular running chamber (19), which is connected or connectable at its periphery via a pressure channel (36) to the pressure chamber (18) and is at least approximately closed in a pressure-tight manner, and
a force transmitting sealing means (20a; 20a, 45), which
is arranged or can be arranged in the running chamber (19),
divides the running chamber (19) in the circumferential direction into two chambers, which are sealed from one another in a pressure-tight manner, of which one chamber is connected pressure-wise to the pressure chamber (18),
and is moveable at the latest directly after the triggering over a part, preferably over the greatest part of the part circular periphery of the running chamber (19),
stands radially inwardly in engagement with a central hub (21a), which is rotationally fixedly connected to the belt winding reel mechanism (12), or is at the latest rotationally fixedly connectable therewith after the triggering, and
is arranged before the triggering as close as possible to the pressure chamber (18), and runs, on the occurrence of pressure in the pressure space (18) after the triggering of the pressure source (17), through a considerable distance through the running chamber (19) while moving along the fixed inner wall (22) and with rotation of the central hub (21a), which is rotationally fixedly connected to the belt winding reel mechanism (12), wherein
the axial end faces of the force transmitting sealing means (20a; 20a, 45), the hub (21a) and the inner wall (22a) stand in a sealing engagement with fixed walls (44) of the housing, of which one is preferably a removable cover,
characterised in that
the sealing means (20a; 20a, 45) stands radially outwardly in engagement with the part circular inner wall (22a), which is stationary in the peripheral direction; in that the force transmitting sealing means includes a band (20a), which extends with its width over the running chamber (19), which is secured at its one end at a position (47) on the hub (21a), which is wound onto the hub (21a) in the direction that on being unwound turns the hub (21a) in the belt winding up direction, which then extends, depending on the rotational position of the hub (21a), in a straight line or with more or less curvature or in a 180° arc to the inner wall (22a), which contacts the latter, at the latest after a certain rotation of the hub (21a) by an amount in the direction towards the pressure channel (36) and which is secured at its other end to a fastening position (48) of the housing (24), preferably at the start of the running chamber (19).

10. Belt tensioner in accordance with claim 9, characterised in that a sealing cylinder (45) is arranged in the 180° arc with the flat end faces of the sealing cylinder (45) standing in sliding engagement with the walls (44).

11. Belt tensioner in accordance with claim 9 or claim 10, characterised in that a normally disengaged clutch (46) is provided between the one end of the band (20a) and the belt winding reel mechanism (12), with the clutch first being engaged on an accident dependent acceleration.

12. Belt tensioner in accordance with claim 11, characterised in that the clutch (46) is so designed that the engagement is cancelled again a sufficient time after the accident dependent tensioning.

13. Belt tensioner in accordance with one of the preceding claims, characterised in that the part of the running chamber (19) remote from the pressure chamber (18) is provided with a vent at or close to its end.

14. Belt tensioner in accordance with one of the preceding claims, characterised in that the hub (21; 21a) is coaxial with the belt reel (25) of the belt winding reel mechanism (12).

15. Belt tensioner in accordance with one of the preceding claims, characterised in that the hub (21; 21a) and eventually also the force transmitting sealing means (20; 20a; 2oa, 45), which stands in engagement with it, or can be brought into engagement with it, is rotatably but non-displaceably arranged in a housing (24) secured to the chassis (12).

## Revendications

1. Tendeur dans des systèmes de ceinture de sécurité pour véhicules, comprenant :
un mécanisme (12) d'enroulement de la ceinture fixé sur le châssis (11) du véhicule et pourvu d'un système de ressort de rappel (31) et d'un dispositif de blocage à l'accélération,
un entraînement (13) pour le mécanisme d'enroulement de la ceinture (12) fonctionnant en direction de l'enroulement de la ceinture, et
un détecteur d'accélération (14) qui réagit lors d'accélérations se produisant lors d'un accident et qui est en liaison de déclenchement (15) avec l'entraînement (13), de telle manière que :
lorsqu'une accélération se produit lors d'un accident, l'entraînement (13) est déclenché et grâce à cela, le mécanisme d'enroulement de la ceinture (12) enroule la ceinture (16) brusquement sur une longueur prédéterminée qui suffit pour appliquer fortement la ceinture (16) sur le passager qu'elle retient,
dans lequel l'entraînement (13) présente :
une source de pression (17) susceptible d'être déclenchée à la réaction du détecteur d'accélération (14), en particulier une charge pyrotechnique qui, lors du déclenchement, établit brusquement une pression élevée dans une chambre de pression (18),
une chambre de déplacement (19) en segment de cercle, au moins pratiquement fermée de manière étanche à la pression, qui est reliée ou qui est susceptible d'être reliée à son début par l'intermédiaire d'un canal de pression (36) à la chambre de pression (18), et
un moyen d'étanchéité (20) pour la transmission d'énergie, qui est agencé dans la chambre de déplacement (19) ou qui peut y être agencé,
qui divise la chambre de déplacement (19) en direction périphérique en deux chambres séparées l'une de l'autre de manière étanche à la pression, dont l'une est reliée en pression à la chambre de pression (18), et
qui au plus tard directement après le déclenchement, est déplaçable au moins sur une partie, de préférence sur la plus grande partie de la périphérie en segment de cercle de la chambre de déplacement (19),
qui est en engagement radialement à l'intérieur avec un moyeu central accouplé de manière solidaire en rotation avec le mécanisme d'enroulement de la ceinture (12) ou susceptible d'être accouplé de manière solidaire en rotation avec ledit mécanisme au plus tard directement après le déclenchement, et
qui est agencé près de la chambre de pression (18) avant le déclenchement et, lorsque de la pression apparaît dans la chambre de pression (18) après le déclenchement de la source de pression (17), parcourt un trajet considérable dans la chambre de déplacement (19) en se déplaçant le long de la paroi intérieure (22) fixe et en faisant tourner le moyeu (21) central accouplé de manière solidaire en rotation avec le mécanisme d'enroulement de la ceinture (12),
les faces frontales axiales du moyen d'étanchéité (20) de transmission de l'énergie, du moyeu (21) et de la paroi intérieure (22) étant en engagement d'étanchéité avec les parois (44) solidaires du boîtier, dont l'une est de préférence un couvercle amovible,
caractérisé en ce que :
le moyen d'étanchéité (20) est en engagement radial extérieur avec la paroi intérieure (22) en segment de cercle fixe en direction périphérique, par le fait que la paroi interne en segment de cercle est réalisée sous la forme d'une couronne dentée intérieure (22), que le moyeu central est réalisé sous la forme d'une roue solaire (21) dentée et que le moyen d'étanchéité de transmission de l'énergie est réalisé sous la forme d'une roue dentée planétaire (20) qui est en engagement avec la couronne dentée intérieure (22) et la roue solaire (21) de préférence seulement au moment du déclenchement.

2. Tendeur de ceinture selon la revendication 1, caractérisé en ce que le moyen d'étanchéité (20) de transmission d'énergie est tout d'abord hors d'engagement avec la paroi intérieure (22) en segment de cercle et/ou avec le moyeu (21), de préférence avec le moyeu (21), ou en ce que, respectivement, le moyeu (21) est hors d'engagement avec le mécanisme d'enroulement de la ceinture (12), et que cet engagement est seulement établi lorsqu'une accélération d'accident se produit directement avant, en même temps que, ou bien en particulier grâce au déclenchement de la source de pression (17), et plus précisément avant que la pression établie dans la chambre de déplacement (19) devant le moyen d'étanchéité (20) de transmission d'énergie soit si élevée que le moyen d'étanchéité (20) de transmission d'énergie soit déplacé sur un trajet considérable sur sa trajectoire autour de l'axe du moyeu (21).

3. Tendeur de ceinture selon l'une ou l'autre des revendications 1 et 2, caractérisé en ce que la paroi intérieure (22) en segment de cercle, ainsi que de préférence aussi le moyen d'étanchéité (20) de transmission d'énergie, sont agencés sur un tiroir (26) qui est susceptible d'être déplacé grâce à la pression de la source de pression (27) déclenchée, depuis une position de repos jusque dans une position de travail, et en position de repos, la paroi intérieure (22) en segment de cercle est hors d'engagement avec le moyen d'étanchéité (20) de transmission d'énergie, ou respectivement, le moyen d'étanchéité (20) de transmission d'énergie est hors d'engagement avec le moyeu central (21), ou bien le moyeu (21) est hors d'engagement avec le mécanisme d'enroulement de la ceinture, et en position de travail, un engagement est établi.

4. Tendeur de ceinture selon la revendication 3, caractérisé en ce qu'il est prévu sur la chambre de pression (18) un organe de déplacement de soupape (27) qui sépare en position de repos la chambre de pression (18) vis-à-vis de la chambre de déplacement (19) et qui, lors de la mise sous pression par la source de pression (17), amène de préférence le tiroir (26) dans la position de travail et ne libère qu'alors seulement la liaison entre la chambre de pression (18) et la chambre de déplacement (19).

5. Tendeur de ceinture selon l'une quelconque des revendications précédentes, caractérisé en ce que la chambre de déplacement (19) à roue planétaire présente au début ou à l'extrémité un élargissement (28, 29) dans lequel la roue dentée planétaire (20) vient hors d'engagement avec la roue solaire (21) et/ou la couronne dentée intérieure (22).

6. Tendeur de ceinture selon l'une quelconque des revendications précédentes, caractérisé en ce que la couronne dentée intérieure (22) ne se poursuit pas dans la région de l'élargissement (28, 29).

7. Tendeur de ceinture selon l'une quelconque des revendications précédentes, caractérisé en ce que la roue dentée planétaire (20), lorsque la source de pression (17) est déclenchée depuis une position de repos par exemple encliquetée, dans laquelle elle est judicieusement déjà en engagement avec la couronne dentée intérieure (22), est déplacée par la pression établie dans la chambre de pression (18) jusque dans une position de travail dans laquelle elle se trouve en engagement avec la roue solaire (21) et la couronne dentée intérieure (22).

8. Tendeur de ceinture selon l'une quelconque des revendications précédentes, caractérisé en ce qu'un segment (22') de couronne dentée intérieure est agencé à déplacement radial au début de la couronne dentée intérieure (22) et en ce qu'il est susceptible d'être déplacé par la pression régnant dans la chambre de pression (18) depuis une position de repos, dans laquelle il se trouve hors d'engagement avec la roue dentée planétaire (20), jusque dans une position de travail dans laquelle il est en engagement avec la roue dentée planétaire (20) et met cette dernière éventuellement aussi en engagement avec la roue solaire (21).

9. Tendeur dans des systèmes de ceinture de sécurité pour véhicules, comprenant :
un mécanisme (12) d'enroulement de la ceinture fixé sur le châssis (11) du véhicule et pourvu d'un système de ressort de rappel (31) et d'un dispositif de blocage à l'accélération,
un entraînement (13) pour le mécanisme d'enroulement de la ceinture (12) fonctionnant en direction de l'enroulement de la ceinture, et
un détecteur d'accélération (14) qui réagit lors d'accélérations se produisant lors d'un accident et qui est en liaison de déclenchement (15) avec l'entraînement (13), de telle manière que :
lorsqu'une accélération se produit lors d'un accident, l'entraînement (13) est déclenché et grâce à cela, le mécanisme d'enroulement de la ceinture (12) enroule la ceinture (16) brusquement sur une longueur prédéterminée qui suffit pour appliquer fortement la ceinture (16) sur le passager qu'elle retient,
dans lequel l'entraînement (13) présente :
une source de pression (17) susceptible d'être déclenchée à la réaction du détecteur d'accélération (14), en particulier une charge pyrotechnique qui, lors du déclenchement, établit brusquement une pression élevée dans une chambre de pression (18),
une chambre de déplacement (19) en segment de cercle, au moins pratiquement fermée de manière étanche à la pression, qui est reliée ou qui est susceptible d'être reliée à son début par l'intermédiaire d'un canal de pression (36) à la chambre de pression (18), et un moyen d'étanchéité (20a; 20a, 45) de transmission d'énergie,
qui est agencé dans la chambre de déplacement (19) ou qui peut y être agencé,
qui divise la chambre de déplacement (19) en direction périphérique en deux chambres séparées l'une de l'autre de manière étanche à la pression, dont l'une est reliée en pression à la chambre de pression (18), et
qui au plus tard directement après le déclenchement, est déplaçable au moins sur une partie, de préférence sur la plus grande partie de la périphérie en segment de cercle de la chambre de déplacement (19),
qui est en engagement radialement à l'intérieur avec un moyeu central (21a) accouplé de manière solidaire en rotation avec le mécanisme d'enroulement de la ceinture (12) ou susceptible d'être accouplé de manière solidaire en rotation avec ledit mécanisme au plus tard directement après le déclenchement, et
qui est agencé près de la chambre de pression (18) avant le déclenchement et, lorsque de la pression apparaît dans la chambre de pression (18), après le déclenchement de la source de pression (17), parcourt un trajet considérable dans la chambre de déplacement (19) en se déplaçant le long de la paroi intérieure (22a) fixe et en faisant tourner le moyeu (21a) central accouplé de manière solidaire en rotation avec le mécanisme d'enroulement de la ceinture (12),
les faces frontales axiales du moyen d'étanchéité (20a ; 20a, 45) de transmission de l'énergie, du moyeu (21a) et de la paroi intérieure (22a) étant en engagement d'étanchéité avec les parois (44) solidaires du boîtier, dont l'une est de préférence un couvercle amovible,
caractérisé en ce que :
le moyen d'étanchéité (20a ; 20a, 45) est en engagement radial extérieur avec la paroi intérieure (22a) en segment de cercle fixe en direction périphérique, par le fait que le moyen d'étanchéité de transmission d'énergie comprend un ruban (20a) qui s'étend par sa largeur sur la chambre de déplacement (19), et ledit ruban, étant fixé par une de ses extrémités à un point (47) sur le moyeu (21a), est enroulé sur le moyeu (21a) dans la direction telle que lors du déroulement, le moyeu (21a) tourne en direction d'enroulement de la ceinture qui alors, selon la position de rotation du moyeu (21a), s'étend de manière rectiligne ou plus ou moins incurvée ou sous un arc de 180° par rapport à la paroi intérieure (22a) sur laquelle, au plus tard après une certaine rotation du moyeu (21a), un tronçon repose en direction du canal de pression (36) et avec son autre extrémité, il est fixé à un point de fixation (48) du boîtier (24), de préférence au début de la chambre de déplacement (19).

10. Tendeur de ceinture selon la revendication 9, caractérisé en ce que dans l'arc de 180° est agencé un cylindre d'étanchéité (45) dont les faces frontales plates sont en engagement coulissant étanche avec les parois (44).

11. Tendeur de ceinture selon l'une ou l'autre des revendications 9 et 10, caractérisé en ce qu'il est prévu entre l'une des extrémités du ruban (20a) et le mécanisme d'enroulement de la ceinture (12) un embrayage (46) normalement débrayé qui n'est embrayé que lors d'une accélération due à un accident.

12. Tendeur de ceinture selon la revendication 11, caractérisé en ce que l'embrayage (46) est réalisé de telle sorte que l'engagement est de nouveau annulé après un temps suffisant suivant la tension due à l'accident.

13. Tendeur de ceinture selon l'une quelconque des revendications précédentes, caractérisé en ce que la partie de la chambre de déplacement (19) qui est détournée de la chambre de pression est pourvue d'un évent sur ou près de son extrémité.

14. Tendeur de ceinture selon l'une quelconque des revendications précédentes, caractérisé en ce que le moyeu (21 ; 21a) est coaxial au rouleau de ceinture (25) du mécanisme d'enroulement de la ceinture (12).

15. Tendeur de ceinture selon l'une quelconque des revendications précédentes, caractérisé en ce que le moyeu (21 ; 21a) et éventuellement aussi le moyen d'étanchéité (20 ; 20a ; 20a, 45) de transmission d'énergie, qui est ou qui peut être mis en engagement avec celui-ci, est agencé en rotation, mais sans possibilité de se déplacer dans un boîtier (24) fixé sur le châssis (12).
